# EUROPEAN PATENT SPECIFICATION

(11) **EP 3 674 191 B1**
(45) Date of publication and mention of the grant of the patent: **14.07.2021**
(21) Application number: 18849257.3
(22) Date of filing: 12.04.2018
(51) Int. Cl.: B62J 27/20

(54) **AIR BAG DEVICE FOR SADDLE-TYPE VEHICLES**
AIRBAGVORRICHTUNG FÜR SATTELFAHRZEUGE
DISPOSITIF DE COUSSIN DE SÉCURITÉ GONFLABLE POUR VÉHICULES DE TYPE À SELLE

(30) Priority: 23.08.2017 JP 2017160230
(43) Date of publication of application: 01.07.2020
(73) Proprietor: Honda Motor Co., Ltd., Tokyo 107-8556 (JP)
(72) Inventor: AIKYO Yutaka, Wako-shi Saitama 351-0193 (JP); SATO Takashi, Wako-shi Saitama 351-0193 (JP)
(74) Representative: Herzog, Markus
(86) International application number: PCT/JP2018/015448
(87) International publication number: WO 2019/038986

(56) References cited:
- EP-A1- 3 636 526
- EP-A1- 3 636 527
- EP-A1- 3 636 528
- WO-A1-2019/064737
- JP-A- 2002 137 778
- JP-A- 2002 137 778
- JP-A- 2003 104 159
- JP-A- 2003 104 159
- JP-A- 2005 505 464
- JP-A- 2009 208 516

## Description

### Technical Field

The present invention relates to an airbag device for a saddle-type vehicle.

### Background Art

Conventionally, airbag devices for saddle-type vehicles in which the airbag is easily deployed upward by discharging gas upward from an inflator provided at the bottom of the airbag device are known (e.g., see Patent Literature 1).

### Citation List

### Patent Literature

Patent Literature 1: Japanese Patent Application Laid-Open No. 2015-145151

### Summary of Invention

### Technical Problem

However, when the inflator is disposed oriented in a direction in which the gas is discharged upward from the inflator as in the case of the prior art, the airbag device is likely to increase in size in a front-rear direction. The airbag device for a saddle-type vehicle is preferably disposed compactly in the front-rear direction and the airbag is preferably deployed vertically upward as much as possible to protect the rider appropriately.

The present invention has been implemented in view of the aforementioned circumstances and it is an object of the present invention to provide an airbag device for a saddle-type vehicle in which the airbag device is disposed compactly in a front-rear direction and the airbag is enabled to be deployed vertically upward.

JP2002-137778A discloses the preamble of claim 1.

### Solution to Problem

The present invention is an airbag device for a saddle-type vehicle including a retainer (41) that is provided in front of a seat (13) for a rider, an inflator (43) and an airbag (42) that is housed in the retainer (41), is inflated by means of a gas discharged from the inflator (43) and is deployed in front of the rider, in which the retainer (41) is provided with a deflection part (70) that deflects the gas discharged from the inflator (43) into the airbag (42) from a flow in a left-right direction to a flow in an upward direction, the deflection part (70) is provided with a left-right extending part (46) extending in the left-right direction from the inflator (43) side and an upward extending part (47) extending in the upward direction from the left-right extending part (46) to form an L-shaped passage (48), and a guide (95, 295, 395) that protrudes into the passage (48) is provided to guide deployment of the airbag (42).

In the above-described invention, a bent part (90) that bends the passage (48) into an L shape may be provided with an outside bent part (91) that forms an L-shaped corner part and an inside bent part (92) that forms an L-shaped angular part, and the guide (95, 295, 395) may be provided in the inside bent part (92).

Furthermore, in the above-described invention, the guide (95, 295, 395) may extend downward from a wall part (53) of the passage (48).

Furthermore, in the above-described invention, the guide (95, 295) may be provided with a downward extending surface (297) extending downward along the upward extending part (47) .

Furthermore, in the above-described invention, the guide (95, 395) may be provided with a slope (96, 396) extending from an upper wall part (53c) side of the left-right extending part (46) to the upward extending part (47) side in the left-right direction and extending diagonally downward.

Furthermore, in the above-described invention, the guide (95) may be provided with a slope (96) extending from the upper wall part (53c) side of the left-right extending part (46) to the upward extending part (47) side in the left-right direction and extending diagonally downward, and a downward extending surface (97) extending downward along the upward extending part (47).

Furthermore, in the above-described invention, the downward extending surface (97) and the slope (96) may be provided integrally.

In the above-described invention, the cylindrically formed inflator (43) may be disposed oriented in the front-rear direction of the vehicle toward which an axis (43c) of the inflator (43) is oriented. According to this configuration, the cylindrically formed inflator (43) may be disposed oriented in the front-rear direction of the vehicle toward which the axis (43c) of the inflator (43) is oriented.

### Advantageous Effects of Invention

According to the airbag device for a saddle-type vehicle according to the present invention, the airbag device for a saddle-type vehicle is provided with the retainer that is provided in front of the seat for the rider, the inflator and the airbag that is housed in the retainer, is inflated by means of a gas discharged from the inflator and is deployed in front of the rider, in which the retainer is provided with the deflection part that deflects the gas discharged from the inflator into the airbag from the flow in the left-right direction to the flow in the upward direction, the deflection part is provided with the left-right extending part extending in the left-right direction from the inflator side and the upward extending part extending in the upward direction from the left-right extending part to form an L-shaped passage and the guide that protrudes into the passage is provided to guide deployment of the airbag.

According to this configuration, the L-shaped passage provided with the left-right extending part and the upward extending part allows the inflator and the airbag to be arranged using spaces in the left-right direction and in the up-down direction, allowing the airbag device to be disposed compactly in the front-rear direction. Furthermore, since the guide protruding into the L-shaped passage can guide deployment of the airbag, the airbag can be deployed vertically upward.

In the above-described invention, the bent part that bends the passage into an L shape may be provided with the outside bent part that forms the L-shaped corner part and an inside bent part that forms the L-shaped angular part, and the guide may be provided in the inside bent part. According to this configuration, since the guide is provided at the inside bent part, it is possible to appropriately guide the airbag through the guide at the inside bent part where the length of the passage is likely to be shorter than the outside bent part and deploy the airbag vertically upward. Moreover, it is possible to guide the part where the airbag changes its orientation from the left-right direction to the up-down direction through the guide, and it is thereby possible to more easily control the orientation of the airbag through the guide.

In the above-described invention, the guide may extend downward from a wall part of the passage. According to this configuration, the length of the passage in the up-down direction can be increased through the guide and the airbag can be thereby deployed vertically upward.

Furthermore, in the above-described invention, the guide may be provided with a downward extending surface extending downward along the upward extending part. According to this configuration, the downward extending surface can guide the airbag in the up-down direction below the upward extending part, and can thereby deploy the airbag vertically upward.

Furthermore, in the above-described invention, the guide may be provided with a slope extending from the upper wall part side of the left-right extending part to the upward extending part side in the left-right direction and extending diagonally downward. According to this configuration, it is possible to gradually narrow down the passage directed from the left-right extending part to the upward extending part through the slope, more easily provide directivity in the airbag deploying direction and control the airbag deploying direction through the guide.

Furthermore, in the above-described invention, the guide may be provided with a slope extending from the upper wall part side of the left-right extending part to the upward extending part side in the left-right direction and extending diagonally downward, and a downward extending surface extending downward along the upward extending part. According to this configuration, the passage from the left-right extending part to the upward extending part is gradually narrowed down by the slope and it is thereby possible to provide the airbag deploying direction with directivity and the downward extending surface can guide the airbag in the up-down direction below the upward extending part. Thus, the airbag can be deployed vertically upward.

Furthermore, in the above-described invention, the downward extending surface and the slope may be provided integrally. According to this configuration, it is possible to easily provide the guide and improve strength and rigidity of the guide.

In the above-described invention, the cylindrically-formed inflator may be disposed oriented in the front-rear direction of the vehicle toward which the axis of the inflator is oriented. According to this configuration, it is possible to provide the inflator more compactly in the front-rear direction and make the airbag device more compact in the front-rear direction.

### Brief Description of Drawings

[Fig. 1] Fig. 1 is a left side view of a motorcycle according to a first embodiment of the present invention.
[Fig. 2] Fig. 2 is a diagram of a peripheral part of an inner cover seen from the rear side with the guide being omitted.
[Fig. 3] Fig. 3 is a front view of an airbag device seen from the rear side.
[Fig. 4] Fig. 4 is a left side view of the airbag device.
[Fig. 5] Fig. 5 is a diagram of the airbag device seen from above.
[Fig. 6] Fig. 6 is a diagram of the airbag device seen from below.
[Fig. 7] Fig. 7 is a diagram of a case seen from the rear.
[Fig. 8] Fig. 8 is a front view of the airbag device from which the cover member is removed when seen from the rear side.
[Fig. 9] Fig. 9 is a left side view of the airbag device from which the cover member is removed.
[Fig. 10] Fig. 10 is a cross-sectional view illustrating a state in which an inflator is attached.
[Fig. 11] Fig. 11 is a diagram time-sequentially illustrating a state of deployment of the airbag.
[Fig. 12] Fig. 12 is a diagram time-sequentially illustrating a state of deployment of the airbag seen from one side.
[Fig. 13] Fig. 13 is a diagram of a case according to a second embodiment seen from the rear.
[Fig. 14] Fig. 14 is a diagram of a case according to a third embodiment seen from the rear.

### Description of Embodiments

Hereinafter, an embodiment of the present invention will be described with reference to the accompanying drawings. Note that in the description, descriptions of directions such as front, rear, left, right and up and down are the same as the directions with respect to the vehicle body unless otherwise specified. A symbol "FR" shown in each drawing indicates the front of the vehicle body, a symbol "UP" indicates the upper side of the vehicle body, and a symbol "LH" indicates the left side of the vehicle body.

### [First embodiment]

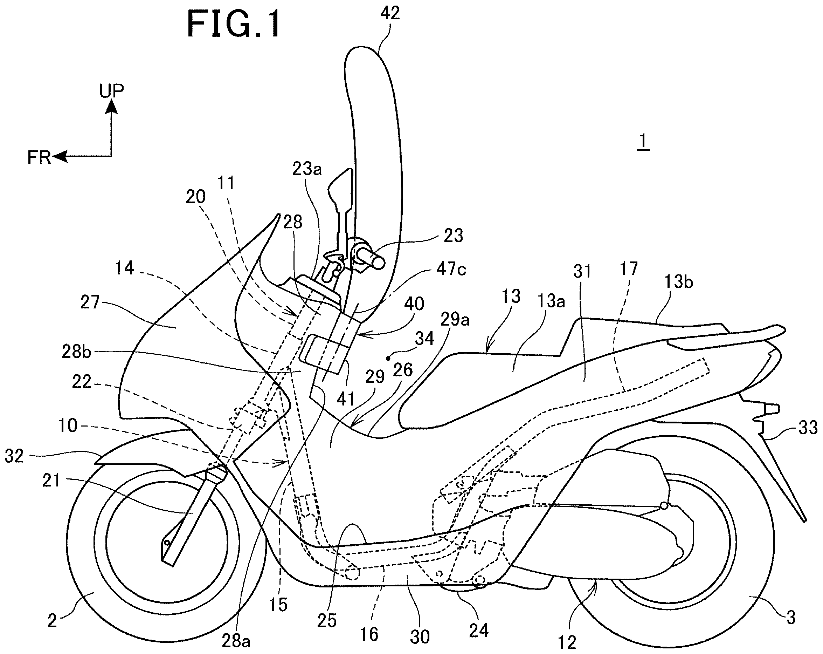

Fig. 1 is a left side view of a motorcycle 1 according to a first embodiment of the present invention. Fig. 1 illustrates a state of an airbag 42, which will be described later, in which the airbag is inflated and deployed. Note that Fig. 1 shows only the left side one of each component provided as a left and right pair, accompanied by each reference numeral.

The motorcycle 1 is a scooter type saddle-type vehicle including a body frame 10, a steering system 11 that steerably supports a front wheel 2, a power unit 12 supported at the rear of the body frame 10, a rear wheel 3 and a seat 13 for a rider to sit thereon in a straddled posture.

The body frame 10 includes a head pipe 14 being provided at a front end thereof, a main frame 15 that extends backward and downward from the head pipe 14, a lower frame 16 that extends backward from the bottom end of the main frame 15 and a left and right pair of rear frames 17, 17 that extend backward, rising backward from the lower frame 16. The head pipe 14 is disposed at the center of the vehicle width.

The steering system 11 includes a steering shaft 20 being pivotally supported by the head pipe 14, a left and right pair of front forks 21, 21 disposed on both left and right sides of the front wheel 2 to support the front wheel 2, a bridge member 22 fixed to the bottom end of the steering shaft 20 to connect the upper parts of the left and right front forks 21, 21 and a handle 23 which is fixed to the top end of the steering shaft 20. The handle 23 is connected to the steering shaft 20 via a handle post 23a which is fixed to the top end of the steering shaft 20.

In a side view of the vehicle, the head pipe 14 leans backward with respect to the up-down direction by a predetermined caster angle set for the motorcycle 1. The steering shaft 20 is inserted into and pivotally supported by the head pipe 14 and is disposed to be inclined rearward in a side view of the vehicle. The steering shaft 20 is positioned at the center of the vehicle width.

The power unit 12 is a unit swing engine being provided with a function of an engine as a drive source of the rear wheel 3 and a function of a swing arm that supports the rear wheel 3. The power unit 12 is pivotally supported by the body frame 10 in a freely swingable manner via a link member 24 which is provided at the front-end part.

The seat 13 is provided above the rear frame 17. The seat 13 is integrally provided with a front-side seat 13a on which the driver is seated and a rear-side seat 13b on which a fellow passenger is seated.

Step floors 25, 25 on which the driver places his/her left and right feet are provided in pairs on the right and left sides of the lower frame 16 which is positioned at the center of the vehicle width.

The motorcycle 1 includes a body cover 26 that covers the vehicle body such as the body frame 10.

The body cover 26 includes a front cover 27 that covers the upper parts of the head pipe 14 and the steering system 11 from the front side and the left and right sides, and an inner cover 28 which is continuous to the rear edge of the front cover 27 and covers the upper parts of the head pipe 14 and the steering system 11 from the rear.

The body cover 26 includes a center cover 29 which is positioned in front of and below the front-side seat 13a, an under cover 30 that covers the vehicle body from below the step floors 25, 25 and a rear side cover 31 that covers the rear frames 17, 17 under the seat 13 from sides.

The motorcycle 1 includes a front fender 32 and a rear fender 33.

The front of the center cover 29 is continuous to the bottom of the inner cover 28. The center cover 29 is positioned on the inside of the left and right legs of the driver extending from the front-side seat 13a to the step floors 25, 25. An upper edge 29a of the center cover 29 is positioned below the front-side seat 13a.

In a side view of the vehicle, the rear surface of the inner cover 28, the upper edge 29a of the center cover 29 and the front surface of the front-side seat 13a partition a straddle space 34 being recessed downward. When getting on and off the motorcycle 1, the rider can straddle the motorcycle 1 through the straddle space 34.

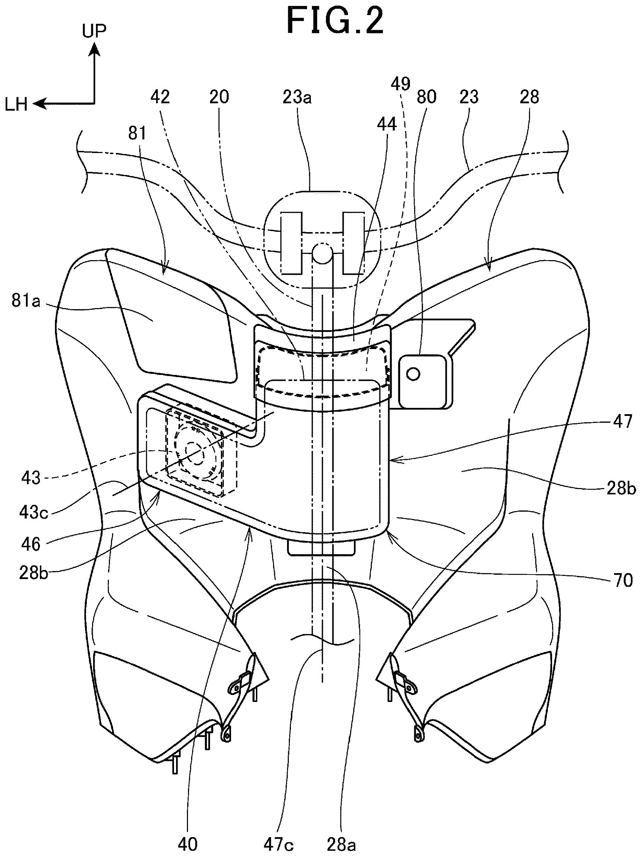

Fig. 2 is a diagram of a peripheral part of the inner cover 28 seen from the rear side.

As shown in Fig. 1 and Fig. 2, the motorcycle 1 includes an airbag device 40 that protects the rider from a shock. The airbag device 40 is provided on the rear surface of the inner cover 28 and is positioned in front of the driver who is seated on the front-side seat 13a. Furthermore, the airbag device 40 is also provided in the rear of the steering shaft 20 under the handle 23 and is positioned in front of the straddle space 34.

In a side view of the vehicle, the rear surface of the inner cover 28 is provided substantially parallel to the steering shaft 20 and falls rearward along the steering shaft 20.

In the upper part of the rear surface of the inner cover 28, as shown in Fig. 1 and Fig. 2, the central part 28a in the vehicle width direction located in the rear of the steering shaft 20 is located at the rearmost and the side parts 28b and 28b which are positioned on the left and right of the central part 28a are inclined so as to be located on the front side toward the outside in the vehicle width direction.

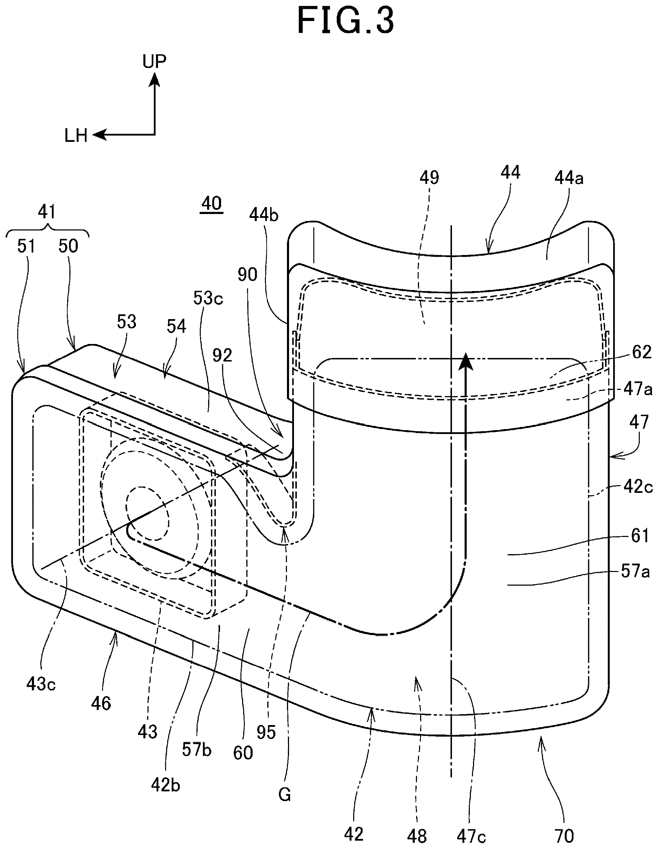

Fig. 3 is a front view of the airbag device 40 seen from the rear side (driver side).

The airbag device 40 includes a box-shaped retainer 41 provided in front of the rider who is seated on the seat 13, an airbag 42 housed in the retainer 41, an inflator 43 for discharging gas into the airbag 42 and a cover member 44 attached to the top of the retainer 41.

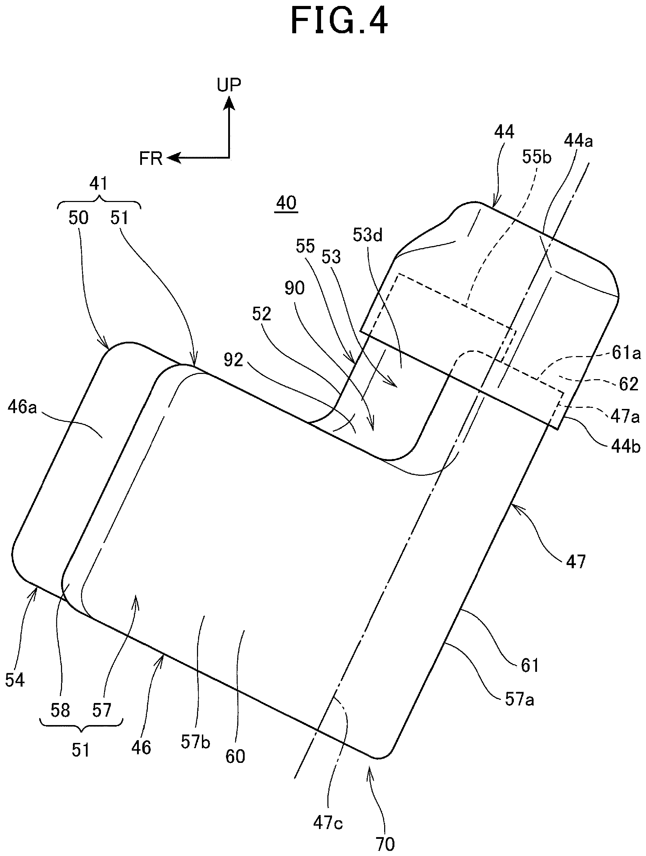

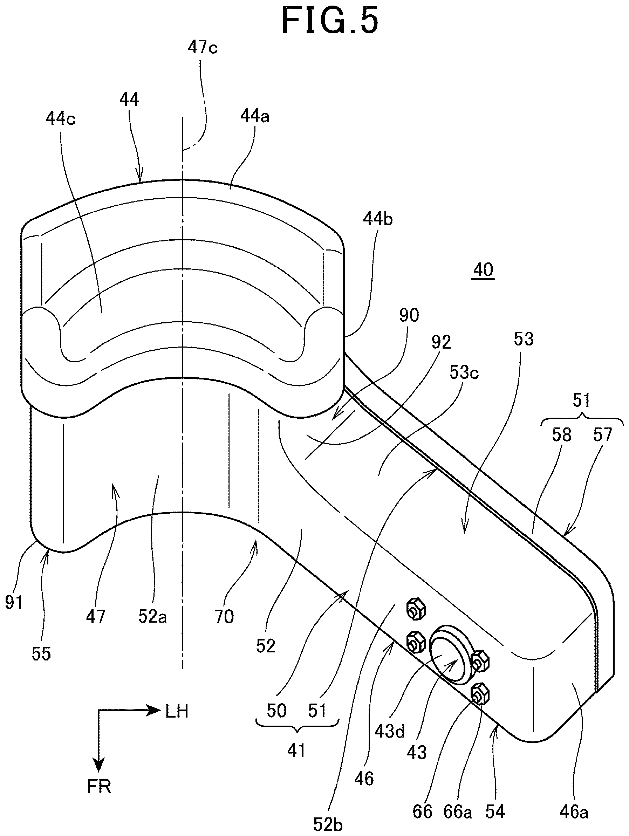

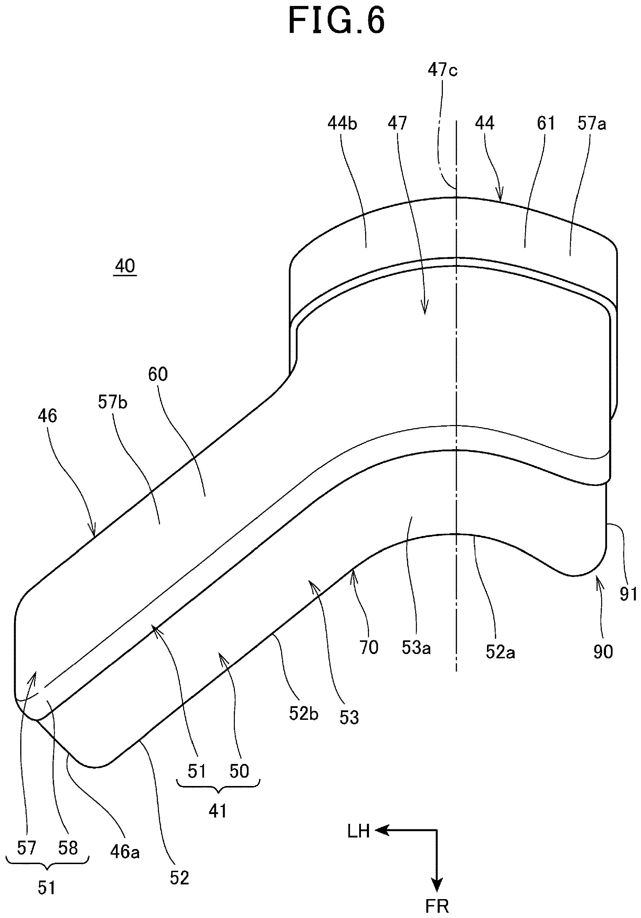

Fig. 4 is a left side view of the airbag device 40. Fig. 5 is a diagram of the airbag device 40 seen from above. Fig. 6 is a diagram of the airbag device 40 seen from below.

Referring to Fig. 2 to Fig. 6, the retainer 41 when seen from the rider side (rear side) is a box-shaped member formed into a reverse L shape. Note that the L shape in the following description means that the retainer 41 appears L-shaped when seen from the front or the rear. Although the retainer 41 appears reverse L-shaped when seen from the rear, it can be said that it is formed into an L shape.

The retainer 41 is positioned in front of the front-side seat 13a, facing the front surface of the front-side seat 13a.

The retainer 41 includes a left-right extending part 46 extending in the left-right direction (vehicle width direction) and an upward extending part 47 extending upward from the left-right extending part 46.

The left-right extending part 46 is a box-shaped part extending in the vehicle width direction. An outside end part 46a in the vehicle width direction of the left-right extending part 46 is positioned outside in the vehicle width direction the steering shaft 20 which is positioned at the vehicle width center. The left-right extending part 46 extends from the outside end part 46a to the vehicle width center along the rear surface of the side part 28b of the inner cover 28.

The upward extending part 47 is a box-shaped part extending in the up-down direction along the steering shaft 20 and falls rearward in a side view of the vehicle. The upward extending part 47 is positioned at the vehicle width center and covers the central part 28a of the inner cover 28 from the rear.

A center line 47c of the upward extending part 47 which extends in the up-down direction by passing through the center of the upward extending part 47 is provided substantially parallel to the steering shaft 20 in the rear of the steering shaft 20 and falls rearward. The center line 47c is positioned at the center of the vehicle width.

An inner end part in the vehicle width direction of the left-right extending part 46 is connected to the lower outer surface of the lower part of the upward extending part 47. That is, the retainer 41 is formed into an L shape by the upward extending part 47 extending upward from the inner end part of the left-right extending part 46. An L-shaped airbag passage 48 (passage) formed of an inner space of the left-right extending part 46 and an inner space of the upward extending part 47 is formed in the interior of the retainer 41.

A top surface opening 49 that exposes the airbag passage 48 upward is formed on the top surface of the upward extending part 47. The airbag 42 is deployed upward from the top surface opening 49. The opening surface of the top surface opening 49 is substantially orthogonal to the center line 47c of the upward extending part 47. The top surface opening 49 is closed with the cover member 44.

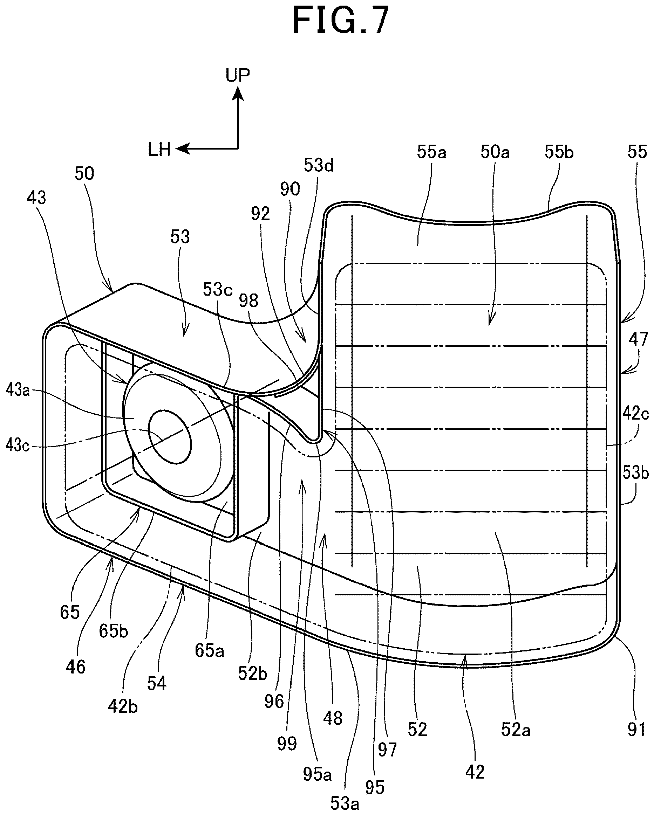

The retainer 41 is formed by connecting a box-shaped case 50, the rear surface (surface on the rider side) of which is opened with a cover 51 that covers the rear surface opening 50a (Fig. 7) of the case 50. The case 50 and the cover 51 are made of, for example, a metallic material.

Fig. 7 is a diagram of the case 50 seen from the rear.

The case 50 includes an L-shaped retainer front surface 52 and a peripheral wall part 53 (wall part) erected in the rear from the entire circumference of the periphery of the retainer front surface 52 other than the part of the case top surface opening 55a which will be described later. The rear surface opening 50a is partitioned by a trailing edge of the peripheral wall part 53.

The case 50 is integrally provided with a left-right extending case part 54 constituting the front of the left-right extending part 46 and an up-down extending case part 55 constituting the front of the upward extending part 47.

A case top surface opening 55a for which no peripheral wall part 53 is provided and which is opened is formed at the top end of the up-down extending case part 55. The case top surface opening 55a constitutes the most part of the top surface opening 49.

The part of the up-down extending case part 55 of the retainer front surface 52 constitutes a front-side curved surface part 52a which is curved to be convex rearward when seen from above. The front-side curved surface part 52a is provided over a substantially overall length in the up-down direction of the upward extending part 47.

The part of the left-right extending case part 54 of the retainer front surface 52 constitutes a front-side flat part 52b extending along the side part 28b (Fig. 2) of the inner cover 28.

As shown in Fig. 7, the case 50 is provided with a bent part 90 that bends the airbag passage 48 into an L shape. The bent part 90 is constructed of an outside bent part 91 that forms a corner part of L-shaped bending of the airbag passage 48 and an inside bent part 92 that forms an angular part of L-shaped bending.

To be more specific, as shown in Fig. 7, the outside bent part 91 is a part of the peripheral wall part 53 of the case 50 where a lower wall part 53a of the left-right extending case part 54 and a one-side side wall part 53b (right side face) of the upward extending part 47 cross each other in an L shape.

The inside bent part 92 is a part of the peripheral wall part 53 of the case 50 where an upper wall part 53c of the left-right extending case part 54 and an other-side side wall part 53d (left side face) of the upward extending part 47 cross each other in an L shape. The inside bent part 92 is formed in a curved surface shape such that the orientation of the peripheral wall part 53 gradually changes from the left-right direction to the upward direction.

Here, the upper wall part 53c of the peripheral wall part 53 is substantially parallel to the lower wall part 53a. The one-side side wall part 53b is substantially parallel to the other-side side wall part 53d.

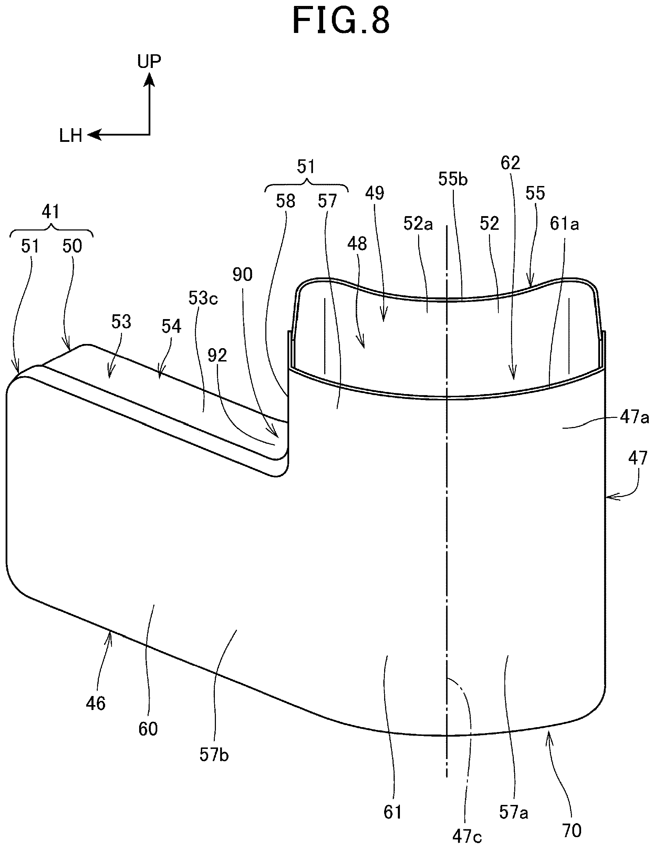

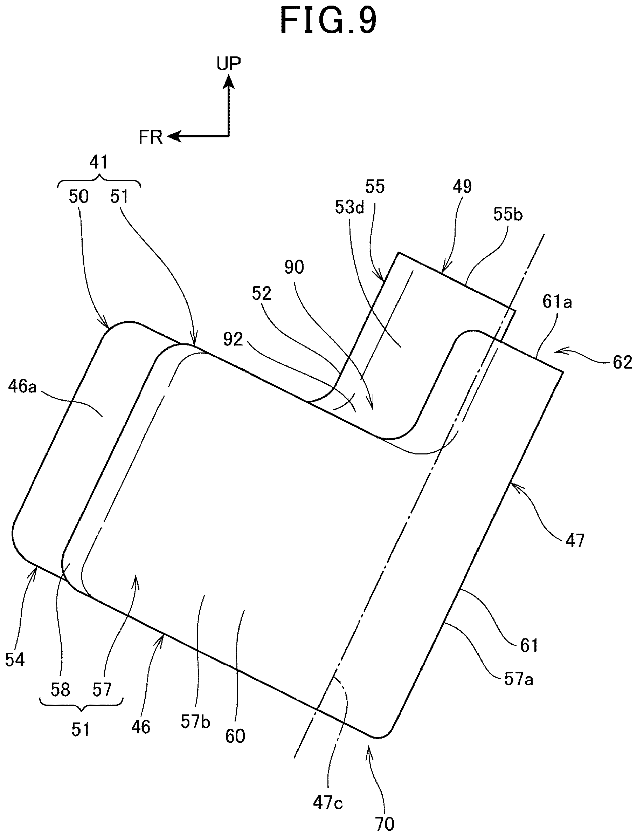

Fig. 8 is a front view of the airbag device 40 from which the cover member 44 is removed when seen from the rear side. Fig. 9 is a left side view of the airbag device 40 from which the cover member 44 is removed.

The cover 51 of the retainer 41 includes a retainer rear surface 57 facing the rider and the seat 13 from the front side and a rib 58 erecting forward from the whole circumference of the peripheral edge of the retainer rear surface 57 other than the top end.

The retainer rear surface 57 is formed into an L shape as in the case of the retainer front surface 52 and faces the retainer front surface 52 from the rear.

The cover 51 is coupled with the case 50 by the rib 58 engaging with the peripheral wall part 53 of the case 50 so as to overlap from outside. The cover 51 is coupled with the case 50 by means of, for example, welding bead along the rib 58.

The retainer rear surface 57 of the cover 51 is integrally provided with a left-right extending cover part 60 constituting the rear surface of the left-right extending part 46 and an up-down extending cover part 61 constituting the rear surface of the upward extending part 47.

The up-down extending cover part 61 constitutes a rear-side curved surface part 57a (curved surface part) facing the front-side curved surface part 52a (Fig. 7, Fig. 8) of the case 50 from the rear. When seen from above, the rear-side curved surface part 57a is formed into a curved surface which is curved so as to be convex rearward. The rear-side curved surface part 57a is provided over a substantially overall length in the up-down direction of the retainer rear surface 57.

The left-right extending cover part 60 constitutes a rear-side flat part 57b facing the front-side flat part 52b (Fig. 7) of the case 50 from the rear.

The upward extending part 47 of the retainer 41 includes a frame-shaped upper peripheral wall part 47a when seen from above at the top end. The top surface opening 49 is partitioned by the upper peripheral wall part 47a.

The upward extending part 47 of the retainer 41 includes a rider-side opening 62 which is opened toward the rider side in the rear. The rider-side opening 62 is cut out from the top end of the rear surface part of the upper peripheral wall part 47a downward and causes the top end part of the airbag passage 48 to communicate with the rear part. The rider-side opening 62 is positioned in the rear of the top surface opening 49 and communicates with the top surface opening 49.

More specifically, as shown in Fig. 8, the rider-side opening 62 is formed in such a way as to cut out the top end 61a of the up-down extending cover part 61 of the retainer rear surface 57 of the cover 51 downward from the top end 55b of the up-down extending case part 55 of the retainer front surface 52 of the case 50. The rider-side opening 62 is formed over the entire top end of the up-down extending cover part 61 in the width direction. The level difference between the top end 61a of the up-down extending cover part 61 and the top end 55b of the up-down extending case part 55 is substantially the same over the entire up-down extending cover part 61 in the width direction.

Note that the top end 61a is the top end of the rear surface part of the upper peripheral wall part 47a of the retainer 41 as well.

As shown in Fig. 7, the retainer 41 is provided with the guide 95 that guides deployment of the airbag 42. The guide 95 is provided on an inner surface of the retainer 41 and protrudes into the airbag passage 48.

The guide 95 is fixed to the inner surface of the inside bent part 92 in the peripheral wall part 53 of the case 50 and protrudes downward from the inside bent part 92.

More specifically, the guide 95 is integrally provided with a slope 96 extending from the upper wall part 53c of the left-right extending case part 54 to the upward extending part 47 side (right side) in the left-right direction and extending diagonally downward, a downward extending surface 97 extending downward along the other-side side wall part 53d of the upward extending part 47 and a fixed surface 98 bending along an inner surface of the inside bent part 92. The slope 96, the downward extending surface 97 and the fixed surface 98 are constructed of plate surfaces of plate members.

The downward extending surface 97 of the guide 95 extends substantially vertically in such a way as to extend the other-side side wall part 53d downward from the bottom end of the other-side side wall part 53d. A bottom end part 95a of the guide 95 is a part where the bottom end of the downward extending surface 97 and the bottom end of the slope 96 are connected. The bottom end part 95a is formed into a curved surface shape so as not to have a sharp edge.

The slope 96 and the downward extending surface 97 are integrally formed, for example, by bending one plate member into a V shape at the bottom end part 95a.

The fixed surface 98 of the guide 95 extends from the top end of the downward extending surface 97 to the top end side of the slope 96 along the inner surface of the inside bent part 92.

The guide 95 is fixed to the retainer 41 when the top end of the slope 96, the top end of the downward extending surface 97 and the fixed surface 98 are connected to the inner surface of the peripheral wall part 53.

The size of a passage through which the airbag 42 passes is reduced in the up-down direction in a part in the airbag passage 48 of the left-right extending part 46 where the guide 95 is provided. More specifically, since the slope 96 is inclined downward toward the upward extending part 47, the cross-sectional area of the airbag passage 48 decreases in the direction from the top end of the slope 96 toward the bottom end side. That is, a narrowing part 99 that narrows down a channel of the airbag passage 48 toward the downstream side is formed between the slope 96 of the guide 95 and the lower wall part 53a in the airbag passage 48. In the present embodiment, the bottom end part 95a of the guide 95 is located above an intermediate part in the up-down direction of the airbag passage 48 of the left-right extending part 46 and below the upper wall part 53c.

The downward extending surface 97 is provided so as to extend the other-side side wall part 53d and is substantially parallel to the one-side side wall part 53b. For this reason, the lateral width of the airbag passage 48 of the upward extending part 47 is substantially equal between the part of the downward extending surface 97 of the guide 95 and the part of the other-side side wall part 53d.

Referring to Fig. 3 to Fig. 6, the cover member 44 is integrally provided with a cover top surface part 44a that covers the top surface opening 49 from above and a cover peripheral wall part 44b that engages with the upper peripheral wall part 47a of the upward extending part 47.

The cover member 44 is attached to the retainer 41 with the inner surface of the cover peripheral wall part 44b engaging with the outer circumferential surface of the upper peripheral wall part 47a. The top surface opening 49 and the rider-side opening 62 are closed with the cover member 44.

A concave part 44c (Fig. 5) being dented downward to avoid the handle post 23a (Fig. 1) is formed in front of the cover top surface part 44a.

Referring to Fig. 2, Fig. 3, Fig. 5 and Fig. 7, the inflator 43 is provided in the airbag passage 48 and located at an upstream end of a deployment path of the airbag 42 in the airbag passage 48. More specifically, the inflator 43 is provided in proximity to an outside end part 46a (Fig. 5) side in the left-right extending case part 54 of the left-right extending part 46 and is disposed offset in the left-right direction (left side) with respect to the steering shaft 20 positioned at the vehicle width center.

The inflator 43 is attached to the front-side flat part 52b (Fig. 7) of the retainer front surface 52 of the left-right extending case part 54.

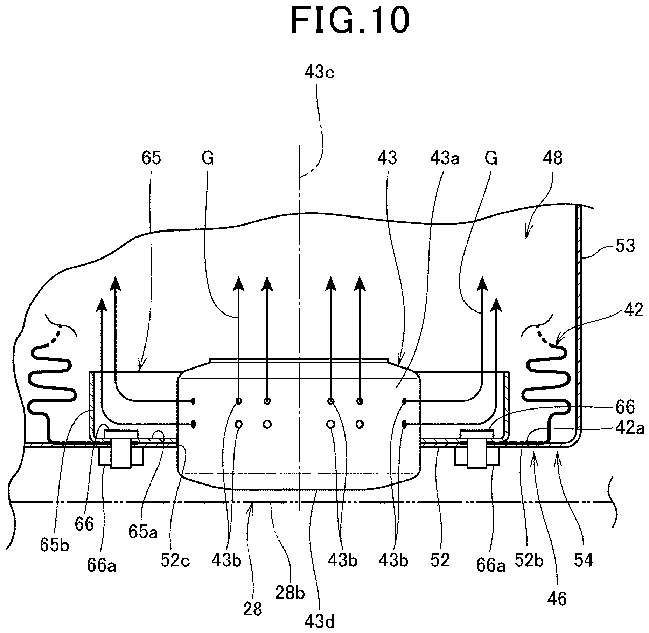

Fig. 10 is a cross-sectional view illustrating a state in which the inflator 43 is attached.

The inflator 43 includes a cylindrically (tubularly) formed housing 43a. A gas generating agent and an initiator that starts reaction for generating a gas in the gas generating agent are provided in the housing 43a. The initiator includes an ignition device. Note that a closed axial end face of the housing 43a is also included in the cylindrical form. Gas discharging holes 43b are formed on an outer circumferential surface of the housing 43a. A plurality of gas discharging holes 43b are provided side by side in the circumferential direction of the housing 43a.

An annular member 65 is integrally connected to the outer circumferential surface of the housing 43a. The annular member 65 includes a flange part 65a that extends in a diameter direction from the outer circumferential surface of the housing 43a and a peripheral wall part 65b that extends in an axial direction of the inflator 43 from the outer circumferential edge of the flange part 65a.

The housing 43a of the inflator 43 is inserted into an inflator support hole 52c formed in the retainer front surface 52 from the inside of the left-right extending case part 54. The housing 43a is positioned in the axial direction of the inflator 43 with the flange part 65a coming into contact with the inner surface of the retainer front surface 52.

The inflator 43 is fastened to the retainer front surface 52 via bolts 66 inserted into the flange part 65a and the retainer front surface 52 and nuts 66a being screwed into the bolts 66. A plurality of the bolts 66 and the nuts 66a are provided in the circumferential direction of the flange part 65a.

The flange part 65a has a rectangular outline when seen in the direction of an axis 43c of the inflator 43.

The peripheral wall part 65b of the annular member 65 is formed into a rectangular frame shape in an axial direction view of the axis 43c to cover the outer circumferential surface of the inflator 43 from outside. More specifically, the peripheral wall part 65b covers the plurality of gas discharging holes 43b from outside.

The inflator 43 discharges a gas G radially from the plurality of gas discharging holes 43b toward the outside in the diameter direction and the gas G changes the direction by hitting the inner peripheral surface of the peripheral wall part 65b and is discharged in the direction of the axis 43c of the inflator 43. That is, the direction in which the gas G of the inflator 43 is discharged into the airbag 42 is the extending direction of the axis 43c. The annular member 65 functions as a guide member that controls the gas G discharge direction.

The inflator 43 is disposed in the direction in which the axis 43c is oriented toward the front-rear direction of the vehicle. With the axis 43c being oriented toward the front-rear direction in this way, even when the inflator 43 has a large diameter, it is possible to reduce the space the inflator 43 occupies in the front-rear direction of the vehicle and provide the inflator 43 compactly in the front-rear direction.

An upstream end 42a of the airbag 42 in the flow of the gas G is held between the flange part 65a of the annular member 65 and the retainer front surface 52 and is thereby fixed to the retainer 41. Furthermore, the airbag 42 is fixed to the retainer 41 with the bolts 66 being inserted into the upstream end 42a.

The peripheral wall part 65b of the annular member 65 is positioned between the gas discharging holes 43b and the upstream end 42a of the airbag 42 in the diameter direction of the inflator 43. This prevents the gas G discharged from the gas discharging holes 43b from directly hitting the upstream end 42a of the airbag 42 and protects the airbag 42 from the gas G.

The front-end part 43d of the inflator 43 projects from the inflator support hole 52c toward the inner cover 28 side in front of the retainer front surface 52. Since the inflator 43 is disposed on the inner cover 28 side, it is possible to prevent the inflator 43 from standing out and prevent the inflator 43 from protruding to the straddle space 34 side.

As shown in Fig. 3, the airbag 42 is housed in the L-shaped airbag passage 48 and provided from the left-right extending part 46 to the upward extending part 47. The airbag passage 48 is an airbag housing space.

The upstream end 42a (Fig. 10) of the airbag 42 is connected to the inflator 43 in the left-right extending part 46. More specifically, the airbag 42 is provided with a bagged part 42b that extends from the upstream end 42a to a position below the guide 95 like a bag and a folded part 42c located at a position downstream of the bagged part 42b in a direction in which the gas G flows. The bagged part 42b extends in the left-right direction through the left-right extending part 46. The folded part 42c is located in the upward extending part 47 and located downstream of the guide 95 in the flow direction of the gas G. The folded part 42c includes a part in which a bag is folded to house the airbag 42 in a compact manner.

The motorcycle 1 includes an acceleration sensor (not shown) that detects an impact acting on the motorcycle 1. The acceleration sensor is electrically connected to a control part (not shown) of the motorcycle 1 and the control part is electrically connected to the inflator 43. The control part determines operation and non-operation of the airbag device 40 based on the detected acceleration. When operating the airbag device 40, the control part operates the inflator 43 to discharge a gas into the airbag 42. The airbag 42 is inflated under a pressure of the gas and deployed upward.

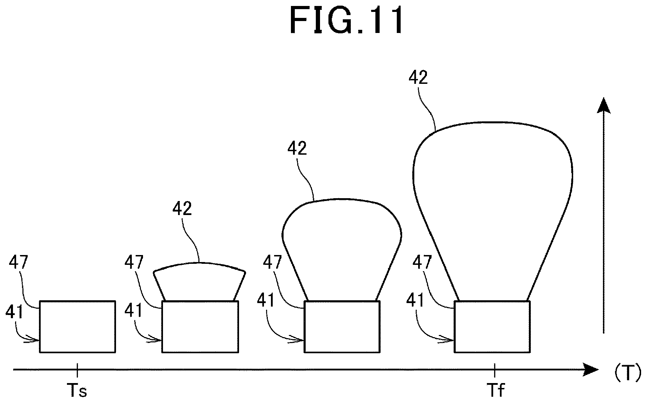

Fig. 11 is a diagram time-sequentially illustrating a state of deployment of the airbag 42. The horizontal axis in Fig. 11 represents an elapsed time T. A time Ts represents operation timing of the inflator 43 and a time Tf represents timing at which deployment is completed.

As shown in Fig. 11, the airbag 42 is inflated in order at the lower part, the middle part and the upper part over time and deployed so as to extend upward.

Here, the flow of the gas G discharged from the inflator 43 will be described.

As shown in Fig. 3, the inflator 43 discharges the gas G into the airbag 42 toward the rear of the vehicle along the axis 43c. That is, the gas G discharging direction of the inflator 43 is the extending direction of the axis 43c. It can also be said that the inflator 43 discharges the gas G toward the driver side along the axis 43c.

More specifically, the inflator 43 is disposed obliquely according to the inclination of the side part 28b of the inner cover 28 and discharges the gas G in the direction of the inclined axis 43c. The axis 43c of the inflator 43 is inclined to be positioned outward and downward in the vehicle width direction as the axis 43c goes to the rear side.

Note that in the present first embodiment, the inflator 43 discharges the gas G rearward along the axis 43c, but the direction need not be right behind, and may be inclined within a predetermined angle range. For example, the axis 43c of the inflator 43 may be inclined with respect to the horizontal line extending rearward within a range of 45° in the up and down directions, respectively, in a side view of the vehicle. In a top surface view of the vehicle, the axis 43c may also be inclined with respect to the center line of the vehicle width within a range of 45° to the left and right, respectively.

Referring to Fig. 3 and Fig. 7, the gas G discharged from the inflator 43 into the airbag 42 is guided in its path by the left-right extending part 46, the guide 95 and the upward extending part 47, and flows through the airbag passage 48 in an L shape.

The gas G discharged rearward from the inflator 43 into the bagged part 42b of the airbag 42 hits the inner surface of the left-right extending cover part 60 via the inner surface of the airbag 42, flows through the left-right extending part 46 in the left-right direction (right direction), passes through the narrowing part 99 and reaches the lower part of the upward extending part 47.

While passing through the narrowing part 99 in the airbag 42, the gas G is rectified and the directivity of the flow of the gas G is intensified in the direction in which the gas G flows through the upward extending part 47. The gas G passes through the narrowing part 99 and flows into the folded part 42c housed in the upward extending part 47.

When flowing into the folded part 42c after passing through the narrowing part 99, the gas G hits the inner surface of the rear-side curved surface part 57a of the up-down extending cover part 61 via the inner surface of the airbag 42 and smoothly changes the direction along the rear-side curved surface part 57a. In the upward extending part 47, the front-side curved surface part 52a also has a curved surface shape, and so the gas G can be guided smoothly.

When the gas G flows from the left-right extending part 46 to the upward extending part 47, the flow changes from the left-right direction to the upward direction, and flows upward through the upward extending part 47. That is, the left-right extending part 46 and the upward extending part 47 constitute a deflection part 70 that deflects the flow of the gas G from the left-right direction to the upward direction.

More specifically, in the upward extending part 47, the gas G flows upward with one side of the left and right sides being guided by the one-side side wall part 53b via the inner surface of the airbag 42 and the other side of the left and right sides being guided by the downward extending surface 97 of the guide 95 and the other-side side wall part 53d.

When the airbag 42 is inflated upward by the gas G flowing upward through the upward extending part 47, the cover member 44 is pushed by the airbag 42 and is burst open. The airbag 42 is deployed by the upward flowing gas G upward from the top surface opening 49.

In the present embodiment, the gas G is rectified by the narrowing part 99 formed of the guide 95 and the directivity in one direction of the flow of the gas G is intensified. Thus, when the gas G flows upward in the upward extending part 47, it is possible to restrain the gas G from flowing upward while turning. For this reason, when deploying the airbag 42 upward, it is possible to restrain the occurrence of torsion of the airbag 42 around the up-down direction as the rotation axis and deploy the airbag 42 upward appropriately.

Furthermore, since the downward extending surface 97 of the guide 95 is provided, the length by which the airbag 42 and the gas G are guided in the upward direction at the upward extending part 47 side increases in the vicinity of the inside bent part 92. For this reason, when the airbag 42 deploys upward, it is possible to restrain the airbag 42 from falling down to the left or right and deploy the airbag 42 vertically upward.

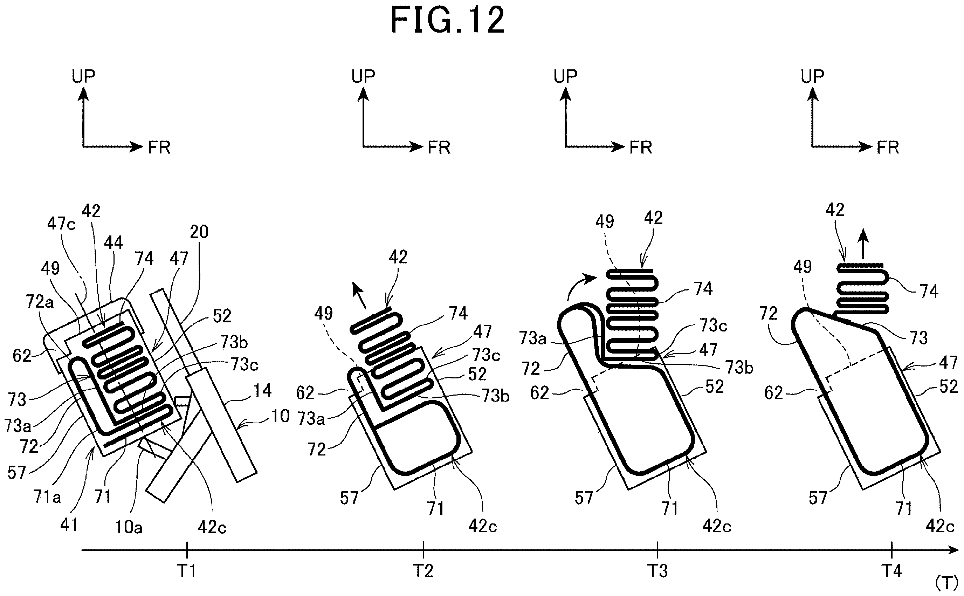

Fig. 12 is a diagram time-sequentially illustrating a state of deployment of the airbag 42 when seen from one side. In Fig. 12, the horizontal axis represents an elapsed time T. Note that in Fig. 12, the body frame 10 is shown only in a state at time T1. Fig. 12 shows the state in the interior of the upward extending part 47.

The retainer 41 is supported by the body frame 10 via a stay 10a which is provided in the body frame 10.

The state at time T1 shows a state in which the airbag 42 is not operating.

A folded part 42c of the airbag 42 includes a first folded part 71 which is provided so as to run along the bottom surface of the upward extending part 47, a second folded part 72 (upstream-side folded part) which is provided downstream of the first folded part 71, a third folded part 73 which is provided downstream of the second folded part 72, and a fourth folded part 74 (downstream-side folded part) which is provided downstream of the third folded part 73.

The second folded part 72 extends upward from a downstream end 71a of the first folded part 71 to the vicinity of the rider-side opening 62 along the inner surface of the retainer rear surface 57.

The third folded part 73 includes a downward extending part 73a that is folded forward and downward at a downstream end 72a of the second folded part 72 and extends downward along the second folded part 72, and a forward extending part 73b that is bent at the bottom end of the downward extending part 73a and extends forward along the top surface of the first folded part 71.

The fourth folded part 74 extends upward from a downstream end 73c of the third folded part 73. The fourth folded part 74 extends upward by stacking a plurality of folding parts folded in a bellows-shape (zig-zag shape) in a side view. The fourth folded part 74 extends upward along the center line 47c of the upward extending part 47 and is housed between the second folded part 72 and the inner surface of the retainer front surface 52.

Here, changes in a state of deployment of the airbag 42 will be described.

Referring to Fig. 12, at time T2, the gas G is discharged from the inflator 43 into the airbag 42 and the first folded part 71 is inflated in the upward extending part 47. In this state, the first folded part 71 is inflated upward and the second folded part 72, the third folded part 73 and the fourth folded part 74 also move upward and the cover member 44 is burst open. Furthermore, the fourth folded part 74 moves upward from the top surface opening 49.

At time T3, the first folded part 71 is further inflated upward and the second folded part 72 is also inflated. When the first folded part 71 and the second folded part 72 are inflated, the downward extending surface 97 of the guide 95 comes into contact with the airbag 42 from one side and guides the airbag 42 upward. In this state, the second folded part 72 is inflated upward from the rider-side opening 62 side and extends upward from the top surface opening 49. More specifically, during inflation, the second folded part 72 is inflated forward or rearward or upward or downward, and pushes the rear surface of the lower part of the fourth folded part 74 forward. This causes the fourth folded part 74 which has fallen rearward to have a vertical posture.

In the present embodiment, since the rider-side opening 62 is provided, inflation of the upper part of the second folded part 72 is hardly prevented by the top end part of the retainer rear surface 57. Therefore, it is possible to cause the upper part of the second folded part 72 to smoothly inflate and cause the second folded part 72 to push the fourth folded part 74 forward.

At time T4, the third folded part 73 is inflated, causing the fourth folded part 74 to move further upward.

After that, the gas G reaches the fourth folded part 74, the fourth folded part 74 is thereby deployed upward vertically and deployment of the airbag 42 is completed.

In this way, the airbag 42 can be deployed vertically by correcting the posture of the fourth folded part 74 vertically through inflation of the second folded part 72.

Furthermore, in the present first embodiment, the gas G is rectified by the narrowing part 99, and so when the first folded part 71 to the fourth folded part 74 are inflated upward, it is possible to restrain the occurrence of torsion of the airbag 42 and deploy the airbag 42 vertically.

As shown in Fig. 2, a main switch 80 for switching on/off power of the motorcycle 1 is provided on the opposite side of the inflator 43 across the upward extending part 47 of the retainer 41. The main switch 80 is provided so as to be embedded in the side part 28b of the inner cover 28.

Furthermore, a housing box 81 is provided above the inflator 43. The housing box 81 is provided on the opposite side of the main switch 80 across the upward extending part 47 of the retainer 41.

The housing box 81 includes a housing part (not shown) provided such that the side part 28b of the inner cover 28 is dented forward and a lid 81a that covers the housing part in an openable/closable manner.

Since the housing box 81 is positioned above the left-right extending part 46 and outside the upward extending part 47, the housing box 81 can be easily opened/closed even when the airbag device 40 is attached to the inner cover 28.

As described above, according to the first embodiment to which the present invention is applied, the airbag device 40 for the motorcycle 1 is provided with the retainer 41 that is provided in front of the seat 13 for the rider, the inflator 43 and the airbag 42 that is housed in the retainer 41, is inflated by means of the gas G discharged from the inflator 43 and is deployed in front of the rider, in which the retainer 41 is provided with the deflection part 70 that deflects the gas G discharged from the inflator 43 into the airbag 42 from the flow in the left-right direction to the flow in the upward direction, the deflection part 70 is provided with the left-right extending part 46 extending in the left-right direction from the inflator 43 side and the upward extending part 47 extending in the upward direction from the left-right extending part 46 to form the L-shaped airbag passage 48 and the guide 95 that protrudes into the airbag passage 48 is provided to guide deployment of the airbag 42.

According to this configuration, the L-shaped airbag passage 48 provided with the left-right extending part 46 and the upward extending part 47 allows the inflator 43 and the airbag 42 to be arranged using the spaces in the left-right direction and in the up-down direction, allowing the airbag device 40 to be disposed compactly in the front-rear direction. Furthermore, since the guide 95 protruding into the L-shaped airbag passage 48 can guide deployment of the airbag 42, the airbag 42 can be deployed vertically upward.

The bent part 90 that bends the airbag passage 48 into an L shape is provided with the outside bent part 91 that forms an L-shaped corner part and the inside bent part 92 that forms an L-shape angular part, and the guide 95 is provided in the inside bent part 92. According to this configuration, since the guide 95 is provided at the inside bent part 92, it is possible to appropriately guide the airbag 42 through the guide 95 at the inside bent part 92 where the length of the airbag passage 48 is likely to be shorter than the outside bent part 91 and deploy the airbag 42 vertically upward. Moreover, it is possible to guide the part where the airbag 42 changes its orientation from the left-right direction to the up-down direction through the guide 95 and it is thereby possible to more easily control the orientation of the airbag 42 through the guide 95.

The guide 95 extends downward from the peripheral wall part 53 of the airbag passage 48. In this way, the length of the airbag passage 48 in the up-down direction can be increased through the guide 95, and the airbag 42 can be thereby deployed vertically upward.

Furthermore, the guide 95 is provided with the downward extending surface 97 extending downward along the upward extending part 47. The downward extending surface 97 can thereby guide the airbag 42 in the up-down direction below the upward extending part 47, and can thereby deploy the airbag 42 vertically upward.

The guide 95 is provided with the slope 96 extending from the upper wall part 53c side of the left-right extending part 46 to the upward extending part 47 side in the left-right direction and extending diagonally downward. In this way, it is possible to gradually narrow down the airbag passage 48 directed from the left-right extending part 46 to the upward extending part 47 through the slope 96, more easily provide directivity in the airbag 42 deploying direction and control the airbag 42 deploying direction through the guide 95. Note that although the inside bent part 92 of the retainer 41 is part of the upper wall part 53c, the slope 96 may extend diagonally from the inside bent part 92.

The downward extending surface 97 of the guide 95 and the slope 96 may be provided integrally. Such a configuration allows the guide 95 to be provided easily and can improve the strength and rigidity of the guide 95.

The cylindrically formed inflator 43 is disposed oriented in the front-rear direction of the vehicle toward which the axis 43c of the inflator 43 is oriented. This makes it possible to provide the inflator 43 in the front-rear direction in a compact manner and make the airbag device 40 more compact in the front-rear direction.

Furthermore, according to the first embodiment that applies the present invention, the airbag device 40 for the motorcycle 1 includes the retainer 41 provided in front of the seat 13 for the rider, the inflator 43 and the airbag 42 that is housed in the retainer 41, inflated by the gas G discharged by the inflator 43 and deployed in front of the rider, in which the retainer 41 includes the top surface opening 49 through which the upward deploying airbag 42 passes and the top surface opening 49 is disposed in the rear of the steering shaft 20. The retainer 41 includes the rider-side opening 62 that communicates with the top surface opening 49 and is opened to the rear seat 13 side. Thus, the retainer 41 can be disposed compactly in the rear of the steering shaft 20. Furthermore, with the gas G discharged by the inflator 43, the airbag 42 inflated upward from the top surface opening 49 is easily inflated on the rider-side opening 62 side. The airbag 42 is inflated preferentially on the rider-side opening 62 side, and it is thereby possible to create operation of the airbag 42 falling forward, and so the airbag 42 can be inflated vertically upward. Furthermore, depending on the size of the rider-side opening 62, the behavior of inflation of the airbag 42 in the rider-side opening 62 changes. For this reason, it is possible to adjust the operation of the airbag 42 falling forward by adjusting the size of the rider-side opening 62.

Furthermore, in a side view, the retainer 41 is disposed obliquely along the steering shaft 20. Thus, the retainer 41 can be disposed compactly along the steering shaft 20. Furthermore, the airbag 42 deployed upward from the retainer 41 which is disposed obliquely can be deployed vertically upward so as to fall forward.

The retainer 41 is formed into a box shape provided with the top surface opening 49 at the top surface, and includes the retainer rear surface 57 facing the seat 13 side and the retainer front surface 52 facing the retainer rear surface 57, and the airbag 42 is folded and housed in the retainer 41. The airbag 42 includes the second folded part 72 and the fourth folded part 74 located downstream of the second folded part 72 in the flow of the gas G, the second folded part 72 extends vertically along the retainer rear surface 57, and the fourth folded part 74 is housed between the second folded part 72 and the retainer front surface 52. When the airbag 42 is deployed by the gas G, the up-down extending second folded part 72 along the retainer rear surface 57 is deployed before the fourth folded part 74. The fourth folded part 74 is caused to fall forward by the precedingly deployed second folded part 72. For this reason, even with the configuration in which the retainer 41 is disposed obliquely along the steering shaft 20, the airbag 42 can be deployed vertically upward.

The rider-side opening 62 is cut out from the top end 61a of the rear surface part of the upper peripheral wall part 47a of the retainer 41 that partitions the top surface opening 49. The rider-side opening 62 can be provided in a simple structure in which the top end 61a of the upper peripheral wall part 47a of the retainer 41 is cut out.

Furthermore, the retainer 41 includes the box-shaped case 50, the rear surface of which is opened and the cover 51 that covers the rear surface opening 50a of the case 50, and the rider-side opening 62 is cut out from the top end 61a of the cover 51. It is thereby possible to provide the box-shaped retainer 41, the rear surface of which is closed with the cover 51 and provide the rider-side opening 62 in a simple structure in which the top end 61a of the cover 51 is cut out.

Moreover, the top surface opening 49 and the rider-side opening 62 are closed with the cover member 44 attached to the top end part of the retainer 41. This makes it possible to hide the top surface opening 49 and the rider-side opening 62 with the cover member 44, improve appearance characteristics and prevent foreign substance such as dirt from entering the retainer 41.

According to the first embodiment that applies the present invention, the airbag device 40 for the motorcycle 1 includes the retainer 41 provided in front of the seat 13 for the rider, the inflator 43 and the airbag 42 that is housed in the retainer 41, inflated by the gas G discharged from the inflator 43 and deployed in front of the rider, in which the cylindrically formed inflator 43 is disposed in the direction in which the axis 43c is oriented toward the front-rear direction of the vehicle, and the retainer 41 includes the deflection part 70 that deflects the gas G discharged from the inflator 43 into the airbag 42 from the flow in the left-right direction to a flow in the upward direction. This makes it possible to dispose the inflator 43 in the front-rear direction in a space-saving manner, and provide the airbag device 40 compactly in the front-rear direction. Furthermore, the gas G of the inflator 43 is deflected by the deflection part 70 from the flow in the left-right direction to a flow in the upward direction, and it is thereby possible to deploy the airbag 42 upward.

The deflection part 70 includes the left-right extending part 46 that extends in the left-right direction from the inflator 43 side and the upward extending part 47 that extends upward from the left-right extending part 46. It is thereby possible for the left-right extending part 46 to guide the gas G discharged from the inflator 43 in the left-right direction and for the upward extending part 47 to guide the gas G upward and deploy the airbag 42 upward.

Furthermore, the upward extending part 47 is disposed in the rear of the steering shaft 20, and the inflator 43 and the main switch 80 of the motorcycle 1 are disposed on the left and right across the upward extending part 47. This makes it possible to deploy the airbag 42 upward from the steering shaft 20 side and efficiently dispose the inflator 43 and main switch 80 on the left and right of the upward extending part 47.

Furthermore, the housing box 81 is disposed above the inflator 43. This makes it possible to provide the housing box 81 using a space above the inflator 43.

Furthermore, the upward extending part 47 includes the rear-side curved surface part 57a that receives the gas G flowing into the upward extending part 47 from the left-right extending part 46. In this way, the rear-side curved surface part 57a receives the gas G flowing from the left-right extending part 46 into the upward extending part 47, and it is thereby possible to cause the gas G to smoothly flow upward and efficiently deploy the airbag 42.

According to the first embodiment to which the present invention is applied, the inflator 43 and the airbag 42 are fixed to the retainer 41 via an annular member 65 that surrounds the inflator 43 and the annular member 65 is positioned between the inflator 43 and the airbag 42. This allows the annular member 65 to fix the inflator 43 and the airbag 42 in a simple structure. The annular member 65 positioned between the inflator 43 and the airbag 42 can control the discharging direction of the gas G and prevent the gas G discharged from the inflator 43 from directly hitting the airbag 42.

The body cover 26 of the motorcycle 1 includes the inner cover 28 that covers the steering shaft 20 from behind and faces the seat 13 from the front and the retainer 41 is provided on the rear surface of the inner cover 28. Thus, it is possible to provide the airbag device 40 at an appropriate position in front of the rider by providing the retainer 41 for the inner cover 28 that covers the steering shaft 20 in front of the seat 13.

Furthermore, the retainer 41 is formed into a box shape, includes the retainer rear surface 57 facing the seat 13 side and the retainer front surface 52 facing the retainer rear surface 57, and the inflator 43 is fixed to the retainer front surface 52. In this way, the inflator 43 is fixed to the retainer front surface 52 and is hardly visually recognizable from the rider side, providing good appearance characteristics. Furthermore, it is possible to prevent the inflator 43 from projecting toward the retainer rear surface 57 side, secure a large space between the rider and the airbag device 40 and improve comfortability of the rider.

Furthermore, the inflator 43 is disposed offset in the left-right direction with respect to the vehicle width center. This makes it possible to reduce the size of the retainer 41 in the front-rear direction at the vehicle width center, secure a large space between the rider and the airbag device 40 at the vehicle width center. Here, the inflator 43 is provided along the side part 28b of the inner cover 28 inclined to position on the front side as it goes outside in the vehicle width direction, and so the inflator 43 can be disposed in the front-rear direction compactly. For this reason, it is possible to secure space between the airbag device 40 and the rider.

The gas G discharged from the inflator 43 is guided by the retainer 41 so as to change the direction from the left-right direction to the up-down direction, and the airbag 42 is deployed upward from the vehicle width center. In this way, even with a configuration in which the inflator 43 is disposed offset in the left-right direction, the gas G is guided by the retainer 41 and it is thereby possible to deploy the airbag 42 upward from the vehicle width center.

### [Second Embodiment]

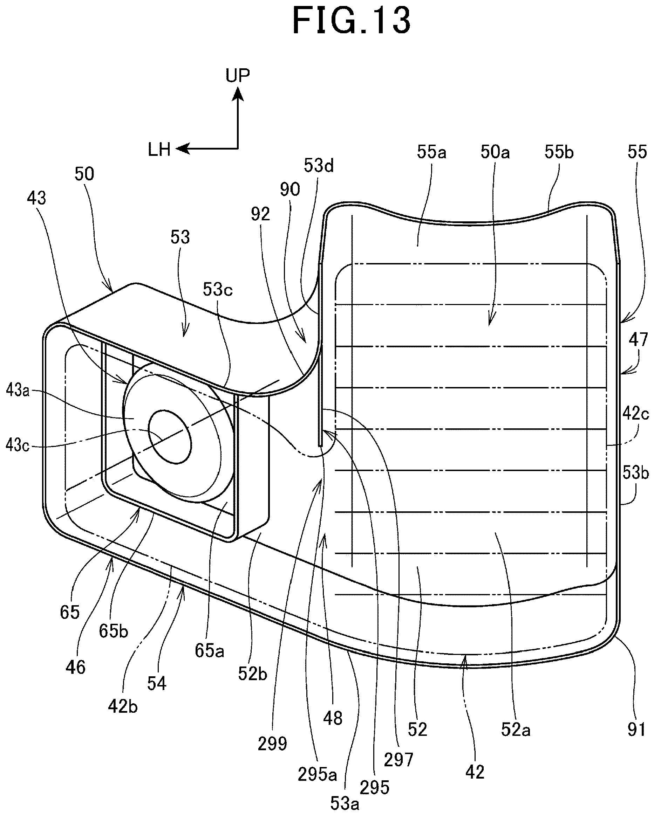

Hereinafter, a second embodiment to which the present invention is applied will be described with reference to Fig. 13. In this second embodiment, parts configured in the same way as in the first embodiment are assigned the same reference numerals and description will be omitted.

The present second embodiment is different from the first embodiment in that a guide 295 having a shape different from the guide 95 is provided.

Fig. 13 is a diagram of the case 50 of the second embodiment viewed from the rear.

The inside bent part 92 of the retainer 41 is provided with the guide 295 that guides deployment of the airbag 42. The guide 295 is provided with a downward extending surface 297 that extends downward along the other-side side wall part 53d of the upward extending part 47. That is, the guide 295 is provided with only the downward extending surface 97 of the first embodiment.

A narrowing part 299 that narrows down the channel of the airbag passage 48 is formed between the bottom end part 295a of the guide 295 and the lower wall part 53a. Since the gas G is rectified by the narrowing part 299, it is possible to restrain the occurrence of torsion of the airbag 42 when the airbag 42 deploys upward and appropriately deploy the airbag 42 upward.

Furthermore, since the downward extending surface 297 of the guide 295 is provided, the length by which the airbag 42 and the gas G are guided in the upward direction at the upward extending part 47 side increases in the vicinity of the inside bent part 92. For this reason, when the airbag 42 deploys upward, it is possible to restrain the airbag 42 from falling down to the left or right and deploy the airbag 42 vertically upward.

### [Third Embodiment]

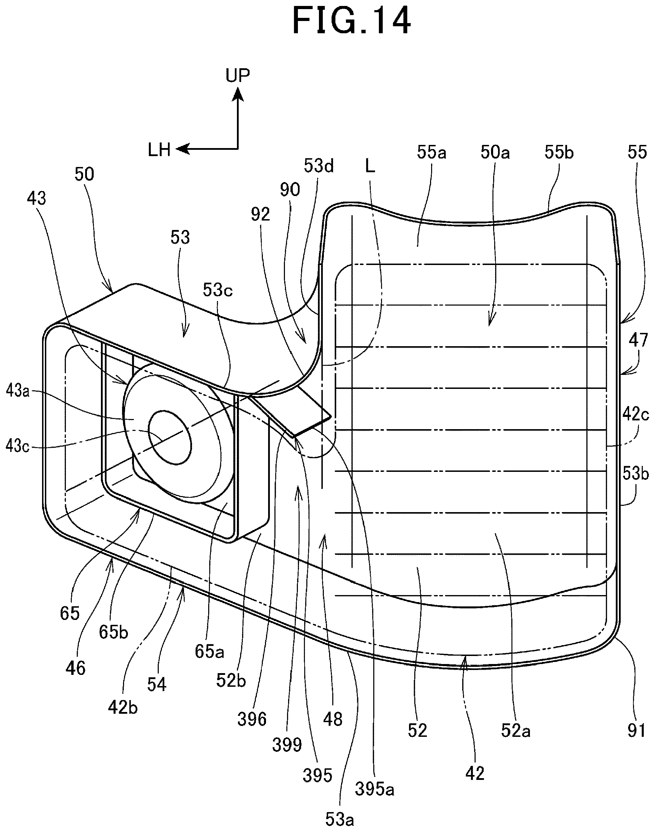

Hereinafter, a third embodiment to which the present invention is applied will be described with reference to Fig. 14. In this third embodiment, parts configured in the same way as in the first embodiment are assigned the same reference numerals and description will be omitted.

The present third embodiment is different from the first embodiment in that a guide 395 having a shape different from the guide 95 is provided.

Fig. 14 is a diagram of the case 50 of the third embodiment viewed from the rear.

The inside bent part 92 of the retainer 41 is provided with the guide 395 that guides deployment of the airbag 42. The guide 395 is provided with a slope 396 extending from the upper wall part 53c of the left-right extending case part 54 to the upward extending part 47 side (right side) in the left-right direction and extending diagonally downward. That is, the guide 395 is provided with only the slope 96 of the first embodiment.

In the airbag passage 48, a narrowing part 399 that narrows down the channel of the airbag passage 48 toward the downstream side is formed between the slope 396 of the guide 395 and the lower wall part 53a.

Since the gas G is rectified by the narrowing part 399, it is possible to restrain the occurrence of torsion of the airbag 42 when the airbag 42 is deployed upward and appropriately deploy the airbag 42 upward.

A bottom end part 395a of the guide 395 is located on an extension L extending downward along the other-side side wall part 53d and guides the airbag 42 that passes through the upward extending part 47 and deploys upward. When the airbag 42 deploys upward, it is thereby possible for the bottom end part 395a of the guide 395 to restrain the airbag 42 from falling down to the left or right and deploy the airbag 42 vertically upward.

Note that the above-described first to third embodiments show an aspect to which the present invention is applied, but the present invention is not limited to the above-described embodiments.

In the above-described embodiments, the guide 95, 295 or 395 has been described as one to be connected to the inner surface of the peripheral wall part 53 of the case 50, but the present invention is not limited to this. For example, as the guide, part of the wall part of the retainer 41 may be caused to protrude into the airbag passage 48 and may be provided integrally with the retainer 41. The guide 95, 295 or 395 may be connected to the cover 51 side instead of the case 50 side.

In the above-described embodiments, the inflator 43 has been described as discharging the gas G into the airbag 42 toward the rear of the vehicle along the axis 43c, but the present invention is not limited to this. For example, a configuration may also be adopted in which the inflator 43 is provided on the cover 51 side and the gas is discharged in front of the vehicle along the axis 43c.

Furthermore, a configuration may also be adopted in which the retainer is provided in an L shape opposite to that shown in Fig. 2 with reference to the center line 47c and the gas flowing through the retainer from the right side to the vehicle width center is deflected upward.

In the above-described embodiments, the inflator 43 has been described assuming that the housing 43a (Fig. 10) is inserted into the inflator support hole 52c of the retainer front surface 52 from the inside of the left-right extending case part 54, but without being limited to this, a configuration may also be adopted in which the housing 43a is inserted into the inflator support hole 52c from the outside of the left-right extending case part 54. In this case, when the flange part provided on the outer circumference of the housing 43a comes into contact with the outer surface of the retainer front surface 52, the inflator 43 is, for example, positioned in the axial direction of the inflator 43 and fixed to the retainer front surface 52 with bolts inserted from the outside of the left-right extending case part 54. According to this configuration, the inflator 43 can be attached or detached from the outside of the retainer 41, providing excellent assemble ability.

Furthermore, according to the above-described embodiments, the inflator 43 is formed into a cylindrical shape centered on the axis 43c of the cylindrically formed housing 43a, but the present invention is not limited to this. The inflator 43 may be formed into a cylindrical shape of a polygon such as a rectangle and the axis may be disposed oriented toward the front-rear direction of the vehicle.

Furthermore, although the motorcycle 1 has been taken as an example of the saddle-type vehicle in the above-described embodiments, the present invention is not limited to this, and the present invention is also applicable to a three-wheel saddle-type vehicle with two front wheels or rear wheels or a saddle-type vehicle with four or more wheels or the like.

### Reference Signs List

- 1: motorcycle (saddle-type vehicle)
- 13: seat
- 40: airbag device
- 41: retainer
- 42: airbag
- 43: inflator
- 43c: axis
- 46: left-right extending part
- 47: upward extending part
- 48: airbag passage (passage)
- 53: peripheral wall part (wall part)
- 53c: upper wall part
- 70: deflection part
- 90: bent part
- 91: outside bent part
- 92: inside bent part
- 95, 295, 395: guide
- 96, 396: slope
- 97, 297: downward extending surface

## Claims

1. An airbag device for a saddle-type vehicle comprising: a retainer (41) that is configured to be provided in front of a seat (13) for a rider;
an inflator (43); and
an airbag (42) that is housed in the retainer (41), is inflated by means of a gas discharged from the inflator (43) and is configured to be deployed in front of the rider, **characterized in that** the retainer (41) comprises a deflection part (70) that deflects the gas discharged from the inflator (43) into the airbag (42) from a flow in a left-right direction of the vehicle to a flow in an upward direction of the vehicle when the airbag device is installed on the vehicle,
the deflection part (70) comprises a left-right extending part (46) extending in the left-right direction from the inflator (43) side and an upward extending part (47) extending in the upward direction from the left-right extending part (46) to form an L-shaped passage (48), and
a guide (95, 295, 395) that protrudes into the passage (48) is provided to guide deployment of the airbag (42).

2. The airbag device for a saddle-type vehicle according to claim 1, wherein
a bent part (90) that bends the passage (48) into an L shape comprises an outside bent part (91) that forms an L-shaped corner part and an inside bent part (92) that forms an L-shaped angular part, and
the guide (95, 295, 395) is provided in the inside bent part (92).

3. The airbag device for a saddle-type vehicle according to claim 1 or 2, wherein the guide (95, 295, 395) extends downward from a wall part (53) of the passage (48).

4. The airbag device for a saddle-type vehicle according to claim 3, wherein the guide (95, 295) comprises a downward extending surface (297) extending downward along the upward extending part (47).

5. The airbag device for a saddle-type vehicle according to claim 3, wherein the guide (95, 395) comprises a slope (96, 396) extending from an upper wall part (53c) side of the left-right extending part (46) to the upward extending part (47) side in the left-right direction and extending diagonally downward.

6. The airbag device for a saddle-type vehicle according to claim 3, wherein the guide (95) comprises a slope (96) extending from the upper wall part (53c) side of the left-right extending part (46) to the upward extending part (47) side in the left-right direction and extending diagonally downward, and a downward extending surface (97) extending downward along the upward extending part (47).

7. The airbag device for a saddle-type vehicle according to claim 6, wherein the downward extending surface (97) and the slope (96) are provided integrally.

8. The airbag device for a saddle-type vehicle according to any one of claims 1 to 7, wherein the cylindrically formed inflator (43) is disposed oriented in a front-rear direction of the vehicle toward which an axis (43c) of the inflator (43) is oriented.

## Patentansprüche

1. Airbag-Vorrichtung für ein Sattelfahrzeug, welche aufweist:
einen Halter (41), der konfiguriert ist, um vor einem Sitz (13) für einen Fahrer vorgesehen zu werden;
einen Inflator (43); und
einen Airbag (42), der in dem Halter (41) aufgenommen ist, mittels von dem Inflator (43) abgegebenem Gas aufgeblasen wird und konfiguriert ist, um vor dem Fahrer entfaltet zu werden, **dadurch gekennzeichnet, dass**
der Halter (41) ein Umlenkteil (70) aufweist, das das vom Inflator (43) abgegebene Gas von einer Strömung in einer Links-Rechts-Richtung des Fahrzeugs zu einer Strömung in aufwärtiger Richtung des Fahrzeugs in den Airbag (42) umlenkt, wenn die Airbag-Vorrichtung an dem Fahrzeug installiert ist,
das Umlenkteil (70) ein sich links-rechts erstreckendes Teil (46) aufweist, das sich in der Links-Rechts-Richtung von der Inflator (43)-Seite erstreckt, sowie ein sich nach oben erstreckendes Teil (47), das sich von dem links-rechts erstreckenden Teil (46) in der aufwärtigen Richtung erstreckt, um einen L-förmigen Kanal (48) zu bilden, und
eine Führung (95, 295, 395), die in den Kanal (48) vorsteht, vorgesehen ist, um das Entfalten des Airbags (42) zu führen.

2. Die Airbag-Vorrichtung für ein Sattelfahrzeug nach Anspruch 1, wobei
ein gebogenes Teil (90), das den Kanal (48) zu einer L-Form biegt, ein nach außen gebogenes Teil (91), das ein L-förmiges Eckteil bildet, und ein nach innen gebogenes Teil (92), das ein L-förmiges Winkelteil bildet, aufweist, und
die Führung (95, 295, 395) in dem nach innen gebogenen Teil (92) vorgesehen ist.

3. Die Airbag-Vorrichtung für ein Sattelfahrzeug nach Anspruch 1 oder 2, wobei die Führung (95, 295, 395) sich von einem Wandteil (53) des Kanals (48) nach unten erstreckt.

4. Die Airbag-Vorrichtung für ein Sattelfahrzeug nach Anspruch 3, wobei die Führung (95, 295) eine sich nach unten erstreckende Oberfläche (297) aufweist, die sich entlang dem nach oben erstreckenden Teil (47) nach unten erstreckt.

5. Die Airbag-Vorrichtung für ein Sattelfahrzeug nach Anspruch 3, wobei die Führung (95, 395) eine Schräge (96, 396) aufweist, die sich von einer Oberes-Wandteil (53c)-Seite des links-rechts erstreckenden Teils (46) zu der sich Nach-oben-erstreckendes-Teil (47)-Seite in der Links-Rechts-Richtung erstreckt und sich diagonal nach unten erstreckt.

6. Die Airbag-Vorrichtung für ein Sattelfahrzeug nach Anspruch 3, wobei die Führung (95) eine Schräge (96) aufweist, die sich von der Oberes-Wandteil (53c)-Seite des links-rechts erstreckenden Teils (46) zu der sich Nach-oben-erstreckendes-Teil Teil (47)-Seite in der Links-Rechts-Richtung erstreckt und sich diagonal nach unten erstreckt, und eine sich nach unten erstreckende Oberfläche (97), die sich entlang dem sich nach oben erstreckenden Teil (47) nach unten erstreckt.

7. Die Airbag-Vorrichtung für ein Sattelfahrzeug nach Anspruch 6, wobei die sich nach unten erstreckende Oberfläche (97) und die Schräge (96) integriert vorgesehen sind.

8. Die Airbag-Vorrichtung für ein Sattelfahrzeug nach einem der Ansprüche 1 bis 7, wobei der zylindrisch geformte Inflator (43) in Vorne-Hinten-Richtung des Fahrzeugs, zu der eine Achse (43c) des Inflators (43) orientiert ist, orientiert ist.

## Revendications

1. Dispositif de coussin de sécurité gonflable pour un véhicule de type à selle comprenant :
un élément de retenue (41) qui est configuré pour être situé devant un siège (13) pour un motocycliste ;
un organe de gonflage (43) ; et
un coussin de sécurité gonflable (42) qui est logé dans l'élément de retenue (41), est gonflé à l'aide d'un gaz rejeté de l'organe de gonflage (43) et est configuré pour être déployé devant le motocycliste, **caractérisé en ce que** l'élément de retenue (41) comprend une partie de déviation (70) qui dévie le gaz rejeté de l'organe de gonflage (43) dans le coussin de sécurité gonflable (42) depuis un écoulement dans une direction gauche-droite du véhicule vers un écoulement dans une direction vers le haut du véhicule lorsque le dispositif de coussin de sécurité gonflable est installé sur le véhicule,
la partie de déviation (70) comprend une partie d'extension gauche-droite (46) s'étendant dans la direction gauche-droite depuis le côté organe de gonflage (43) et une partie d'extension vers le haut (47) s'étendant dans la direction vers le haut depuis la partie d'extension gauche-droite (46) pour former un passage en forme de L (48), et
un guide (95, 295, 395) qui fait saillie dans le passage (48) est prévu pour guider le déploiement du coussin de sécurité gonflable (42).

2. Dispositif de coussin de sécurité gonflable pour un véhicule de type à selle selon la revendication 1, dans lequel
une partie courbée (90) qui courbe le passage (48) selon une forme de L comprend une partie courbée vers l'extérieur (91) qui forme une partie coin en forme de L et une partie courbée vers l'intérieur (92) qui forme une partie angulaire en forme de L, et
le guide (95, 295, 395) est situé dans la partie courbée vers l'intérieur (92).

3. Dispositif de coussin de sécurité gonflable pour un véhicule de type à selle selon la revendication 1 ou 2, dans lequel le guide (95, 295, 395) s'étend vers le bas depuis une partie paroi (53) du passage (48).

4. Dispositif de coussin de sécurité gonflable pour un véhicule de type à selle selon la revendication 3, dans lequel le guide (95, 295) comprend une surface d'extension vers le bas (297) s'étendant vers le bas le long de la partie d'extension vers le haut (47).

5. Dispositif de coussin de sécurité gonflable pour un véhicule de type à selle selon la revendication 3, dans lequel le guide (95, 395) comprend une pente (96, 396) s'étendant depuis un côté partie paroi supérieure (53c) de la partie d'extension gauche-droite (46) vers le côté partie d'extension vers le haut (47) dans la direction gauche-droite et s'étendant en diagonale vers le bas.

6. Dispositif de coussin de sécurité gonflable pour un véhicule de type à selle selon la revendication 3, dans lequel le guide (95) comprend une pente (96) s'étendant depuis le côté partie paroi supérieure (53c) de la partie d'extension gauche-droite (46) vers le côté partie d'extension vers le haut (47) dans la direction gauche-droite et s'étendant en diagonale vers le bas, et une surface d'extension vers le bas (97) s'étendant vers le bas le long de la partie d'extension vers le haut (47).

7. Dispositif de coussin de sécurité gonflable pour un véhicule de type à selle selon la revendication 6, dans lequel la surface d'extension vers le bas (97) et la pente (96) sont fournies d'un seul tenant.

8. Dispositif de coussin de sécurité gonflable pour un véhicule de type à selle selon l'une quelconque des revendications 1 à 7, dans lequel l'organe de gonflage de forme cylindrique (43) est disposé orienté dans une direction avant-arrière du véhicule vers laquelle un axe (43c) de l'organe de gonflage (43) est orienté.
